# EUROPEAN PATENT SPECIFICATION

(11) **EP 1 477 657 B1**
(45) Date of publication and mention of the grant of the patent: **20.05.2020**
(21) Application number: 03705291.7
(22) Date of filing: 18.02.2003
(51) Int. Cl.: F02D 41/38, F02D 41/40, F02M 51/00, F02M 45/04, F01N 3/08, F02D 41/02, F02D 41/14

(54) **FUEL INJECTION CONTROL DEVICE OF INTERNAL COMBUSTION ENGINE, AND METHOD OF INJECTION-FEEDING HIGH-PRESSURE FUEL**
KRAFTSTOFFEINSPRITZSTEUERUNGSVORRICHTUNG einer BRENNKRAFTMASCHINE UND VERFAHREN ZUR ZUFUHR VON HOCHDRUCKKRAFTSTOFF per Einspritzung
DISPOSITIF DE REGLAGE DE L'INJECTION DE CARBURANT DANS UN MOTEUR A COMBUSTION INTERNE, ET PROCEDE D'ALIMENTATION PAR INJECTION DE CARBURANT HAUTE PRESSION

(30) Priority: 18.02.2002 JP 2002040171
(43) Date of publication of application: 17.11.2004
(73) Proprietor: TOYOTA JIDOSHA KABUSHIKI KAISHA, Toyota-shi, Aichi-ken, 471-8571 (JP)
(72) Inventor: MAGARIDA, Naofumi, Toyota-shi, Aichi-ken 471-8571 (JP); OHKI, Hisashi, Toyota-shi, Aichi-ken 471-8571 (JP); HAYASHI, Kotaro, Toyota-shi, Aichi-ken 471-8571 (JP); ISHIYAMA, Shinobu, Toyota-shi, Aichi-ken 471-8571 (JP); KOBAYASHI, Masaaki, Toyota-shi, Aichi-ken 471-8571 (JP); SHIBATA, Daisuke, Toyota-shi, Aichi-ken 471-8571 (JP); OHBA, Takahiro, Toyota-shi, Aichi-ken 471-8571 (JP); NEGAMI, Akihiko, Toyota-shi, Aichi-ken 471-8571 (JP)
(74) Representative: TBK
(86) International application number: PCT/JP2003/001734
(87) International publication number: WO 2003/069146

(56) References cited:
- WO-A1-99/47802
- DE-A1- 10 123 035
- DE-A1- 19 937 148
- JP-A- 10 205 383
- JP-A- 2001 227 388
- JP-B2- 2 808 180
- US-A- 5 402 760

## Description

The present invention relates to a system and a method to supply high pressure fuel to a combustion chamber of an internal combustion engine.

### Background of the Invention

A fuel injection control system is generally comprises equiped with a forced feed system which transfers a high pressure fuel to a fuel injection valve, the fuel injection which injects the high pressure fuel into a combustion chamber of an internal combustion engine and an electronic controller which electrically controls the fuel injection valve and the forced feed system. The fuel injection control system retains fuel at a preset pressure in the forced feed system and opens the fuel injection valve for a preset period, to inject a desired amount of fuel into the combustion chamber. If the fuel pressure is steady in the forced feed system, a quantity of the injected fuel can be simply determined by the opening period of the valve. Under the steady condition, the quantity of the injected fuel is controlled with high precision.

Further, a method of fuel injection, to conduct the fuel injection near the top dead center of the compression stroke as the main injection so as to provide the engine output as well as to conduct a fuel injection prior to the main injection as a sub-injection (pilot injection) in a single combustion cycle, is known as a method of fuel injection applied to a diesel engine including the fuel injection control system.

Since the fuel supplied prior to the main injection serves as a heat source (or an ignition source) when the pilot injection is conducted, and the heat source gradually expands in the combustion chamber to reach the combustion, the combustion state of the fuel is relatively slow in the combustion chamber, and simultaneously, an ignition delay time is shortened. Therefore, the combustion noise caused by the engine operation is reduced, and further, the exhaust gas characteristics are improved.

Now, an opening/closing action of the fuel injection valve generates a pressure force pulsation (undulation) at fuel of the upstream of the fuel injection valve (in the forced feed system) more or less. Particularly, when the fuel injection is conducted plural times by closed timings, the pressure force pulsation caused by the pressured fuel injection tends to cause decrease in the control precision of subsequent fuel injections. For example, the pressure force pulsation of fuel caused by the pilot injection causes decrease in the accuracy of quantity of the fuel injected by the main injection (hereinafter referred to as "a main injection quantity"). To solve the above-described problem, a fuel injection control system, as disclosed in Japanese Patent Official Gazette No.2808180, adjusts the main injection quantity with consideration of influence of pressure force pulsation caused by pilot injections, so that the control precision of the main injection quantity is improved. On the other hand, recently a more precise logic has been adopted for control structures of the fuel injection quantity and fuel injection timing in the fuel injection control system, since performances of the forced feed system and the fuel injection valve are improved. For example, there is a control method to conduct sub-injections (pilot injections) in plural times (multi-pilot injection) is followed by the main injection in a single combustion cycle. For example, when conducting the pilot injection twice as multi-pilot injection followed by the main injection, the first pilot injection makes ignition of the fuel with certainty to restrain a drastic rise of a pressure force (combustion pressure) so that the combustion state of the applied object (internal combustion engine) is remarkably improved. Now, as described above, when the fuel injection is conducted plural times in closed timings, the pressure force pulsation caused by the precedent fuel injection influences the subsequent fuel injections. In case of performing the multi-pilot injection, the pressure force pulsation caused by the first pilot injection influences the second pilot injection. Thus, like the system disclosed in the above-mentioned Japanese Patent, it is conceivable that a control method to adjust the quantity of the fuel injected by the second injection (second injection quantity) may be applied with consideration of the influence of the pressure force pulsation caused by the first injection. However, an adjustment of the second injection quantity causes variations in a time interval between the ending time of the second injection and the starting time of the main injection. When the pilot injection is conducted, it is the essential condition to set the time interval between the ending time of the pilot injection and the starting time of the main injection at a most suitable value, to secure the effectiveness of the pilot injection. Therefore, there might be a possibility that the engine combustion could not be stabilized due to shifting of the time interval between the ending time of the pilot injection and the starting time of the main injection from the above-mentioned suitable range of time interval.

Document DE 101 23 035 A1 shows a split fuel injection control system in which fuel injection quantities can be corrected in response to fluctuations of a fuel injection pressure. The corrections are performed to achieve the desired injection quantity despite the variable fuel pressure. The disclosure also shows a limitation of the correction in accordance with technical limits of the used injector.

### Summary of the Invention

The present invention is devised in view of the foregoing, and an object thereof is to improve control precision of quantity and timing of fuel injection, in a fuel injection control system of an internal combustion engine, which is capable of conducting a fuel injection of at least three times in succession in a single combustion cycle.

The other object is to provide a method to improve control precision of quantity and timing of fuel injection in an internal combustion engine, which is capable of conducting a fuel injection of at least three times in succession in a single combustion cycle.

For reference's sake, "a single combustion cycle" means one period of an engine operation including a combustion stroke . Further, to "conduct a fuel injection three times" means any combination of three successive fuel injections in a single combustion cycle of the engine which conducts a fuel injections plural times (at least three times) in a single combustion.

For example, to "conduct a fuel injection three times" could mean, of five fuel injections in a single combustion cycle, a case where the first, the second and the third injections are performed, a case where the third, the fourth and the fifth injections are performed, or a case where the second, the third and the fourth injections are performed.

When a pressure fluctuation (pulsation) is generated in the fuel passageway by the first fuel injection, the control system performs the following controls:
(1) Corrects (modifies) the quantity of the fuel which will be injected in the second fuel injection (the second injection quantity), so as to cancel out the influence of the pressure pulsation.
(2) In addition, Sets the suitable range (L1-L2) for the pilot interval to prevent excessive variation of the pilot interval that may influence the combustion state of the engine 1.
(3) If an applicable value (candidate value) to cancel out the influence of the pressure fluctuation is earlier timing or later timing than the suitable range, the system adopts a specific value (for example the forward limit value or the backward limit value) as the suitable value.
(4) If the system adopts the specific value in the suitable range as the suitable value of the ending time of the second pilot injection, the system makes the fuel injection quantity reflect the difference between the suitable value and the candidate value.

The system may set the suitable range referring to the operation condition of the engine such as the engine rotation speed and the engine load.

Particularly, to obtain the desired effect, the invention is to provide a fuel injection control system as defined in appended claims 1 or 6

It is preferable that the above described systems conduct the main fuel injection to obtain the engine output as the third fuel injection. According to the arrangement, the first fuel injection and the second fuel injection function as sub-injections prior to the main fuel injection which provides the engine output so as to stabilize the engine combustion state, improve the exhaust characteristic and the like. In this case, the interval between the ending time of the second fuel injection and the starting time of the third injection becomes the main factor for determining the magnitudes of the effects (the effectiveness) of the sub-injections such as stabilization of the engine combustion state and improvement of the exhaust characteristic. Utilizing the arrangement, the control system may set the suitable range of the interval so that the interval fits a proper value. By building the control structure, as described above, the control system can cancel out the influence of the pressure pulsation caused by the first fuel injection, while sufficiently keeping the adequate effect of the sub-injections.

The invention is to provide also a method for conducting a fuel injection as defined in appended claim 8. Further preferable aspects are defined in the dependent claims.

### Brief Description of the Drawing

In the accompanying drawings:
FIG. 1 is a schematic constitution diagram showing a diesel engine system according to an embodiment of the present invention;
FIG. 2 is a time chart showing driving pulses of a fuel injection valve at the execution time of a pilot injection.and pressure fluctuations in a fuel injection valve on the same time axis;
FIG. 3 is a time chart schematically explaining the procedures for determining a waveform of driving pulses of the fuel injection valve;
FIG. 4 is a flow chart showing processing procedures for determining driving pulses of the fuel injection valve when a pilot injection is conducted; and
FIG.5 is a time chart illustrating a waveform of driving pulses of the fuel injection valve observed in an arbitrary combustion cycle and a subsequent combustion cycle, according to the control structure of a modification of the preferred embodiment; and
FIG.6 is a time chart illustrating a waveform of driving pulses of the fuel injection valve observed in an arbitrary combustion cycle and a subsequent combustion cycle, according to the control structure of a modification of the preferred embodiment.

### Description of Preferred Embodiments

Hereinbelow, the present invention will be described by way of an embodiment of a fuel injection control device for a diesel engine system, and a method for conducting a fuel injection supply with the control device.

### [Structure and function of engine system]

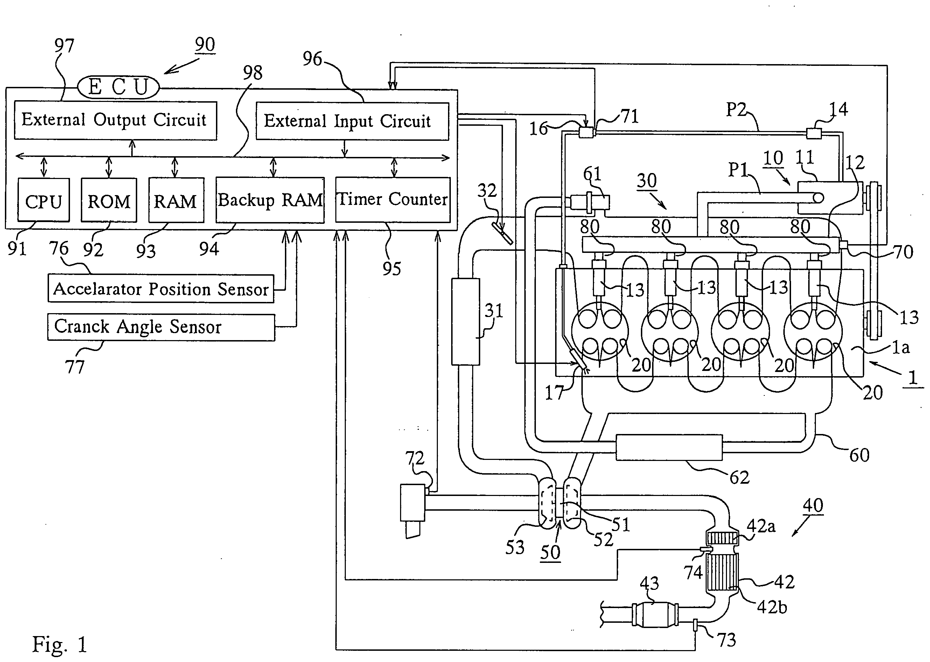

In FIG. 1, an internal combustion engine 1 (hereinafter, referred to as the "engine") is a straight (in-line) four-cylinder diesel engine system, mainly constructed of a fuel supply system 10, combustion chambers 20, an intake system 30, and an exhaust system 40, and which conducts an engine operation throughout an intake stroke, a compression stroke, an expansion (combustion) stroke, and an exhaust stroke as a single combustion cycle.

First, the fuel supply system 10 includes a supply pump 11, a common rail 12, fuel injection valves 13, a shutoff valve 14, a metering valve 16, a fuel addition valve 17, an engine fuel passageway P1, and an additional fuel passageway P2.

The supply pump 11 increases a pressure of the fuel drawn from a fuel tank (not shown) to a high pressure, and supplies the common rail 12 with the fuel through the engine fuel passageway P1. The common rail 12 serves as an accumulator which maintains (accumulates) the high pressure fuel supplied from the supply pump 11 at a predetermined pressure, and distributes the accumulated fuel to the individual fuel injection valves 13. The fuel injection valve 13 is a solenoid valve including an electromagnetic solenoid (not shown) inside, and properly opens the valve to inject the fuel to supply it into the associated combustion chamber 20.

On the other hand, the supply pump 11 supplies the fuel addition valve 17 with a portion of the fuel drawn from the fuel tank through the additional fuel passageway P2. The shutoff valve 14 and the metering valve 16 are sequentially provided on the additional fuel passageway P2 in a direction from the supply pump 11 to the fuel addition valve 17. The shutoff valve 14 shuts off the additional fuel passageway P2 so as to stop the fuel supply in case of emergency. The metering valve 16 controls a pressure PG of the fuel (fuel pressure) supplied to the fuel addition valve 17. The fuel addition valve 17 is a solenoid valve including an electromagnetic solenoid (not shown) inside, and adds a fuel, which serves as a reducing agent, in a proper quantity at a proper timing to the upstream of a NOx catalyst casing 42 in the exhaust system 40.

The intake system 30 forms a passageway (intake passageway) for an intake air supplied to each chamber 20. On the other hand, the exhaust system 40 forms a passageway (exhaust passageway) for an exhaust gas emitted from each combustion chamber 20.

Further, the engine 1 is provided with a known supercharger (turbo charger) 50. The turbo charger 50 includes rotating bodies 52 and 53 connected with each other through a shaft 51. The one rotating body (turbine wheel) 52 is exposed to the exhaust gas in the exhaust system 40, and the other rotating body (compressor wheel) 53 is exposed to the intake air in the intake system 30. The turbocharger 50 having this structure utilizes an exhaust gas flow (exhaust pressure) received on the turbine wheel 52 to rotate the compressor wheel 53, thereby increasing an intake pressure, namely conducting supercharging.

In the intake system 30, intercooler 31 is provided at the downstream of the compressor wheel 53 for forcibly cooling the intake air whose temperature has been raised by the supercharging. A throttle valve 32 provided at the further downstream of the intercooler 31 is an electronically-controlled type open/close valve whose opening can be adjusted non-stepwise, and has such a function that a flow passageway area of the intake air is changed under a pre-determined condition so as to adjust the supply quantity (flow rate) of the intake air.

In the engine 1, an exhaust gas recirculating passageway (EGR passageway) 60 is formed which communicates the intake system 30 and the exhaust system 40 with each other. The EGR passageway 60 has a function for properly returning a portion of the exhaust gas to the intake system 30. The EGR passageway 60 is provided with an EGR valve 61 which can be opened/closed non-stepwise by electronic control so as to freely adjust the flow rate of the exhaust gas (EGR gas) flowing through the EGR passageway 60, and an EGR cooler 62 for cooling the exhaust gas passing (recirculating) through the EGR passageway 60.

In the exhaust system 40, the NOx catalyst casing 42 containing a storage-reduction type NOx catalyst and a particulate filter is provided at the downstream of the communication portion between the exhaust system 40 and the EGR passageway 60. Also, an oxidation catalyst casing 43 containing an oxidation catalyst is provided at the downstream of the NOx catalyst casing in the exhaust system 40.

Various types of sensors are installed on respective portions of the engine 1, and signals of environmental conditions of the respective portions, and the operation state of the engine 1 are outputted.

To be specific, a rail pressure sensor 70 outputs a detection signal according to the pressure of the fuel accumulated in the common rail 12. A fuel pressure sensor 71 outputs a detection signal according to the pressure (fuel pressure) PG of the fuel which has been introduced out of the fuel flowing through the additional fuel passageway P2, into the fuel addition valve 17 through the metering valve 16. An airflow meter 72 outputs a detection signal according to a flow rate (intake quantity) GA of the intake air at the upstream of the compressor wheel 53 in the intake system 30. An oxygen concentration sensor 73 outputs a detection signal which continuously changes according to the oxygen concentration in the exhaust gas at the downstream of the NOx catalyst casing 42 (at the upstream of the oxidation catalyst casing 43) in the exhaust system 40. The detection signal from the oxygen concentration sensor 73 is utilized as a parameter for calculating an air/fuel ratio A/F in the air fuel mixture supplied to the engine combustion of the engine 1. An exhaust gas temperature sensor 74 is mounted at a predetermined position (between a honeycomb structure 42a which will be described later and a particulate filter 42b) in the NOx catalyst casing 42 in the exhaust system 40, and outputs a detection signal according to the exhaust gas temperature (gas temperature at the entrance of the filter) at that position.

An accelerator pedal position sensor 76 is attached to an accelerator pedal (not shown), and outputs a detection signal according to an accelerator pedal depression quantity ACC. A crank angle sensor 77 outputs a detection signal (pulse) every time when an output shaft (crank shaft) of the engine 1 rotates to a predetermined angle. These respective sensors 70 through 77 are electrically connected with an ECU 90.

The ECU 90 includes a central processing unit (CPU) 91, a read-only memory (ROM) 92, a random access memory (RAM) 93, a backup RAM 94, and a timer/counter 95, and further includes a logic operation circuit constituted by connecting these respective members 91 through 95, an external input circuit 96 including an A/D converter, and an external output circuit 97, with one another through a bidirectional bus 98.

The ECU 90 configured as described above conducts processing of the detection signals from the different types of the sensors, such as, for example, performs a calculation process to calculate an air/fuel ratio A/F in the air fuel mixture supplied for the engine combustion, based on the detection signal from the oxygen concentration sensor 73, and also conducts different types of control relating to the operation state of the engine 1, based on the detection signals from these different types of sensors mainly, the control relating to the opening/closing action of the fuel injection valves 13, opening adjustment of the EGR valve 61, and opening adjustment of the throttle valve 32.

### [Structure and function of NOx catalyst casing]

Of the constituting elements of the engine described above, the structure and the function of the NOx catalyst casing 42 provided in the exhaust system 40 will be described in detail hereinbelow.

Inside the Nox catalyst casing 42, the straight-flow type honeycomb structure 42a containing alumina (Al₂0₃) as a main component, and the wall-flow type particulate filter 42b (simply referred to as the "filter" hereafter) containing a porous material as a main component are respectively arranged in series as exhaust gas purifying catalysts with a predetermined gap.

A layer of carrier made of, for example, alumina, is formed in a plurality of passageways forming the honeycomb structure 42a, and an alkaline metal such as potassium (K), sodium (Na), lithium (Li), and cesium (Cs), alkaline earth such as barium (Ba) and calcium (Ca), and rare earth such as lantern (La) and yttrium (Y) which function as the NOx storage agent, and precious metal such as platinum (Pt) which function as the oxidation catalyst (precious metal catalyst) are carried on the surface of the carrier layer. The NOx storage agent and the precious metal catalyst mixedly carried on the carrier (the honeycomb structure on which the carrier layer comprising alumina is formed) 42a jointly constitute the NOx catalyst (storage-reduction type NOx catalyst).

The NOx storage agent has such characteristics that it stores NOx when the oxygen concentration in the exhaust gas is high, and releases NOx when the oxygen concentration in the exhaust gas is low (when the reduction component concentration is high) . If HC, CO, and the like exist in the exhaust gas when the NOx is released in the exhaust gas, the precious metal catalyst promotes the oxidation reaction of the HC and CO so as to cause oxidation-reduction reaction between the NOx serving as an oxidation component and HC and CO serving as a reduction component. That is, HC and CO are oxidized to CO₂ and H₂O, and NOx is reduced to N₂.

On the other hand, the NOx storage agent no longer stores NOx after it has stored Nox up to a predetermined limit quantity, even when the oxygen concentration in the exhaust gas is high. In the engine 1, the reduction component is intermittently supplied to the upstream of the NOx catalyst casing 42 in the exhaust passageway, with the fuel addition and a post injection which will be described later, thereby the concentration of the reduction component in the exhaust gas is increased. That is, the reduction component periodically releases and purifies (reduces) the NOx stored in the NOx catalyst, (before the NOx storage quantity of the NOx catalyst (NOx storage agent) reaches the limit quantity) so as to recover the NOx storing capability of the NOx storage agent.

On the other hand, the porous material forming the filter 42b is obtained by wash-coating a ceramic material such as for example cordierite with a coat material such as alumina, titania, zirconia, and zeolite, and has characteristics to transmit the exhaust gas. Also, the filter 42b is a so-called wall-flow type filter including exhaust gas flow-in passageways which have an open upstream end and a closed downstream end, and exhaust gas flow-out passageways which have a closed upstream end and an open downstream end, which extend in parallel with one another. In addition, a coat layer (carrier layer) made of alumina and the like for carrying the NOx storage agent and the precious metal catalyst is formed in pores formed on the surface and the inside of a partition wall located between both of the exhaust gas passageways.

The filter 42b having this structure purifies particulates such as soot and noxious components such as NOx contained in the exhaust gas, based on the following mechanism.

The NOx storage agent cooperates with the precious metal catalyst to repeat storing, releasing, and purifying NOx according to the oxygen concentration and the reduction component quantity in the exhaust gas as described above. On the other hand, the NOx storage agent has characteristics of secondarily generating active oxygen during this process of purifying NOx. When the exhaust gas is transmitted through the filter 42b, the particulates such as the soot contained in the exhaust gas are caught by the structure (the porous material) . Here, since the active oxygen generated by the NOx storage agent has an extremely high reactivity (activity) as an oxidation agent, the particulates deposited on and near the NOx catalyst among the caught particulates react to this active oxygen quickly (without generating luminous flame), and are purified.

The reaction heat generated from the honeycomb structure (NOx catalyst supported by the structure) 42a arranged at the upstream side of the NOx catalyst casing 42 efficiently increases the temperature of the filter 42b arranged at the downstream side so as to increase action of decomposing the particulates by the filter 42b.

### [Fuel addition]

In the engine 1, an atomized fuel (reduction agent) is directly added into the exhaust system 40 through the fuel addition valve 17 at a predetermined interval so as to conduct control for increasing the reduction component concentration in the exhaust gas (fuel addition). The reduction component supplied by the fuel addition periodically releases and purifies (reduces) the NOx stored in the NOx catalyst, (before the NOx storage quantity of the NOx catalyst (NOx storage agent) provided in the exhaust system 40 reaches the limit quantity) thereby recovers the NOx storing capability of the NOx storage agent.

### [Overview of fuel injection control]

The ECU 90 conducts the fuel injection control based on the operation condition of the engine 1 grasped by the detection signals from the various types of the sensors. The fuel injection control in this embodiment relates to conducting the fuel injection into the respective combustion chambers 20 through the individual fuel injection valves 13, and refers to a series of processes for setting parameters such as a fuel injection quantity Q, the injection timing, and the injection pattern, wherein opening/closing of the individual fuel injection valves 13 based on these specified parameters is performed.

The ECU 90 repeats this series of processes at a predetermined interval during the operation of the engine 1. The fuel injection quantity (injection period) and the injection timing are basically determined (calculated) based on the accelerator pedal depression quantity ACC and the engine rpm NE (the parameter calculated based on the pulse signal from the crank angle sensor), and by referring to a preset map (not shown).

Further, regarding setting of the fuel injection pattern in a single combustion cycle, the ECU 90 conducts the fuel injection near the compression top dead center as a main injection in the respective cylinders so as to provide the engine output, and also conducts a fuel injection (post injection) following the main injection and a fuel injection (pilot injection) prior to the main injection as a sub-injection at an appropriately selected timing and in an appropriately selected cylinder.

### [Post injection]

The fuel supplied into the combustion chamber 20 by the post injection is reformed into a light hydrocarbon (HC) to be exhausted into the exhaust system 40. In other words, the light HC, which functions as a reducing agent, is supplied into the exhaust system 40 by the post injection so as to increase the reducing component concentration in the exhaust gas, similar to adding the fuel.

### [Pilot injection]

With a diesel engine, the inside of the combustion chamber generally reaches to a temperature, which induces self-ignition of the fuel, at the end of the compression stroke. Especially, if the fuel for combustion is supplied at once by injecting it into the combustion chamber when the operation conditions of the engine are in the middle/high load areas, the fuel is burned explosively accompanied with noise. Since the fuel supplied prior to the main injection serves as a heat source (or an ignition source) when the pilot injection is conducted and the heat source gradually expands in the combustion chamber to reach the combustion, the combustion state of the fuel in the combustion chamber is relatively slow, and simultaneously, the ignition delay time is reduced. Therefore, the noise caused by the engine operation is reduced, and further, the NOx quantity in the exhaust gas is reduced.

The fuel injection control system according to the present embodiment conducts the pilot injection twice and the subsequent main injection in succession in a single combustion cycle in the individual cylinders of the engine 1 under proper operation conditions. A first pilot injection mainly has a function of forming the ignition source in the combustion chamber 20 so as to enhance the ignitability of the fuel. The second pilot injection mainly has a function of generating a flame spread gradually in the combustion chamber so as to prevent ignition delay.

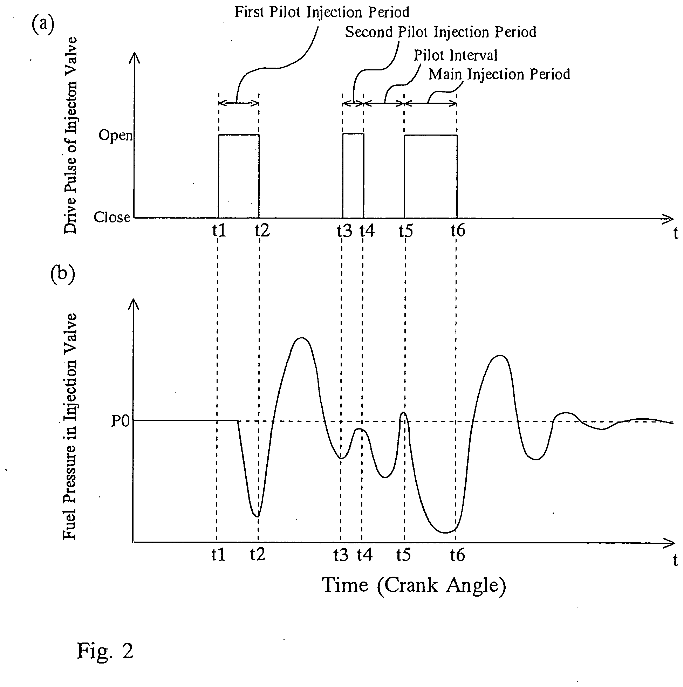

Fig. 2 is a time chart showing driving pulses of the fuel injection valve 13 outputted from the ECU 90, and the pressure fluctuation (pressure pulsation) in the fuel injection valve 13 caused by the open/close action of the fuel injection valve 13 following the driving pulse, on the same time axis at the time when two pilot injections and the main injection are executed in succession.

First, as shown in Fig. 2(a), the ECU 90 outputs a driving pulse corresponding to the first pilot injection (tl-t2), the second pilot injection (t3-t4) and the main injection (t5-t6) according to the operation state of the engine 1. Responding to the waveform of the driving pulse, the fuel injection valve 13 opens/closes to inject the fuel in a preset quantity at preset intervals. When the fuel injection control is carried out, the opening period of the fuel injection valve 13 is set according to the quantity (volume flow rate per unit time, for example) of the fuel injected during the period of time that the fuel injection valve 13 opens. Setting of the opening period is conducted on the assumption that the fuel pressure in the fuel injection valve 13 is maintained constant.

However, as shown in Fig. 2(b), pulsation (undulation) occurs in the fuel pressure in the fuel injection valve 13 with opening/closing motion of the valve 13. the result, the quantity of the injected fuel supplied by means of the fuel injection valve 13 tends to become lower than a target value when the fuel pressure in the fuel injection valve 13 is less than a presumed value P0, and tends to become higher than the target value when the fuel pressure in the fuel injection valve 13 exceeds the presumed value P0.

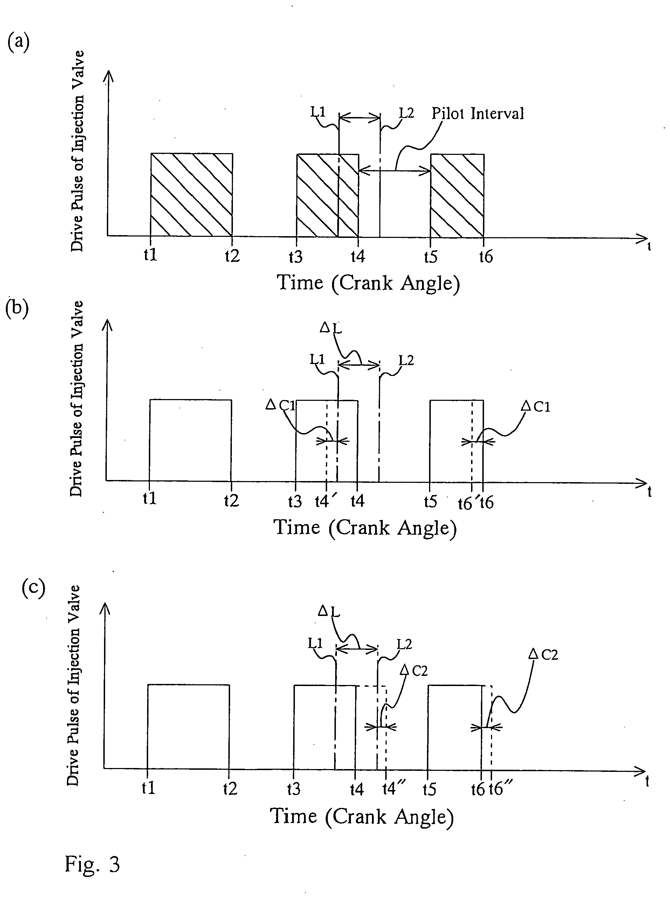

Thus, the ECU 90 determines a waveform of driving pulses to actuate the fuel injection valve 13 according to the following procedures (I) - (III).
(I) When execution of the pilot injection is requested, the ECU 90 calculates a candidate value of the starting time and of the ending time of the first pilot injection, and a candidate value of the starting time and of the ending time of the second pilot injection, based on the operation state of the engine 1.
   For example, in Fig. 3(a), time t1 and t2 are respectively regarded as the starting time and the ending time of the first pilot injection, and time t3 and t4 are respectively regarded as the starting time and the ending time of the second pilot injection. Further, time t5 and t6 are respectively regarded as the starting time and ending time of the main injection, then, the shaded area in Fig. 3 (a) can define the target value of the total fuel injection quantity (Strictly considered, there is a slight time lag between the variation of the driving pulses and opening/closing motion of the fuel injection valve). If the fuel pressure is steady, the target value of the total fuel injection quantity equals the total quantity of the fuel that is actually injected (hereinafter, referred to as the "actual total fuel quantity"). However, there is a gap (hereinafter, referred to as the "fuel quantity gap") between, the target value of the total fuel injection quantity and the actual total fuel quantity because the pressure pulsation caused by the first pilot injection influences the fuel quantity injected by the second pilot injection and by the main injection as described above.
(II) In order to correct the fuel quantity gap, the ECU 90 modifies the candidate value (time t4 in Fig. 3) of the ending time of the second pilot injection. The modification of the ending time t4 of the second pilot injection causes a change of the period (t4-t5 : hereinafter, referred to as the "pilot interval") from the ending time of the second pilot injection to the starting time of the main injection because it is preferable that the starting time t5 of the main injection is not changed. Here, the length of the pilot interval is a main parameter to determine the effectiveness of the pilot injection, and, therefore, a suitable range (L1-L2 in Fig. 3) is preset as a tolerance limit. And, if a candidate value of the ending time of the second injection is in the suitable range (L1-L2), the candidate value is adopted as the suitable value of the ending time of the second pilot injection.
(III) On the other hand, as shown in Fig. 3(b) for example, if a candidate value t4' modified to correct the fuel quantity gap is earlier timing than the forward limit value L1, the ECU 90 adopts the forward limit value L1 (the earliest timing in the suitable range) as the suitable value of the ending time of the second pilot injection. In this case, the ending time t6 of the main injection is forwarded by a period ΔC1 corresponding to the difference between the forward limit value L1 and the candidate value t4' (the ending time t6 of the main injection is changed to time t6'). As a result, the main injection quantity is reduced so that the actual total fuel quantity is made equal to the target total fuel quantity. In addition, if further modification is made by considering the influence of the pressure pulsation of the first and the second pilot injections at the time of determining the suitable value of the main injection quantity, the accuracy in having the actual total fuel quantity equal to the target total quantity can be enhanced further.
(IV) On the other hand, as shown in Fig. 3(c) for example, if a candidate value t4" modified to correct the fuel quantity gap is the later timing than the backward limit value L2, the backward limit value L2 (the latest timing in the suitable range) is adopted as the suitable value of the ending time of the second pilot injection. In this case, the ending time t6 of the main injection is set back by period ΔC2 corresponding to the difference between the backward limit value L2 and the candidate value t4". As a result, the main injection quantity is increased so that the actual total fuel quantity is made equal to the target total fuel quantity. In addition, if further modification is made by considering the influence of the pressure pulsation of the first and the second pilot injections at the time of determining the suitable value of the main injection quantity, the accuracy in having the actual total fuel quantity equal to accurately the target total quantity can be enhanced further.

### [Specific control steps for pilot injection]

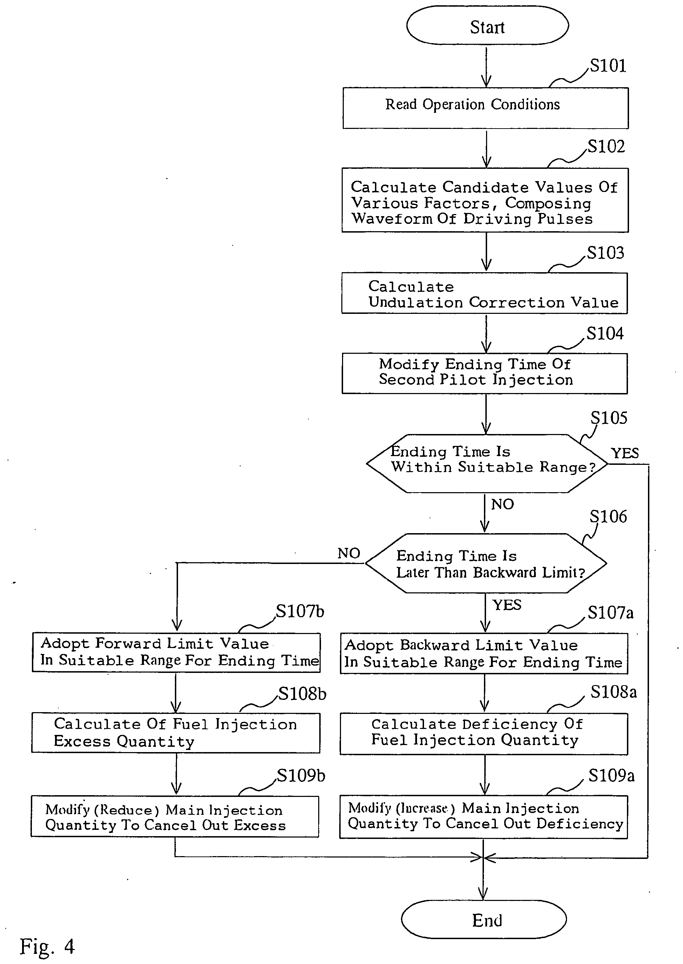

Fig. 4 is a flowchart showing processing steps (routine) for determining the waveform of the driving pulses of the fuel injection valve 13 when the pilot injections are conducted. The ECU 90 executes this routine at a predetermined interval during the operation of the engine 1.

When the processing shifts to this routine, first, in Step S101, the ECU 90 reads operation conditions of the engine 1, for example the accelerator pedal depression quantity ACC, the engine rotation speed NE and the like, which are required for determining the driving pulse.

In Step S102, the ECU 90 calculates candidate values of various factors, which include the starting time and the ending time of the first pilot injection, the second pilot injection, the main injection and the like, composing a waveform of the driving pulses (see also Fig. 3(a)).

In Step S103, the ECU 90 calculates a correction value (hereinafter, referred to as the "undulation correct value") for the fuel injection quantity by the second fuel injection (hereinafter, referred to as the "second pilot injection quantity"), required to diminish the influence of the pressure pulsation (undulation) caused by the first pilot injection. The calculation of the undulation correction value is carried out based on the engine rotation speed NE, and by referring to the map (not shown).

Characteristics of the pressure pulsation (wavelength, the pressure pulsation generation time and the like) can be substantially precisely determined by physical factors such as length of a fuel flow path, a volume modulus of elasticity of the fuel, and the engine rotation speed NE. Thus, it is possible to obtain an undulation correction value with adequately high precision to diminish the influence of the pressure pulsation, using a preset map which reflects the physical factors characteristic of the engine system as the applied object.

In Step S104, the ECU 90 corrects the second pilot injection quantity considering the undulation correction value obtained in Step S103. Furthermore the ECU 90 modifies the ending time (candidate value) of the second pilot injection based on the corrected value of the second pilot injection quantity.

In Step S105, the ECU 90 determines whether the ending time of the second pilot injection modified in Step S104 is within the suitable range (L1-L2 in Fig. 3). Besides, the suitable range is sequentially updated based on the engine rotation speed NE recognized in Step S101. It is more preferable that the ECU 90 refers to not only the engine rotation speed NE, but also various parameters such as air/fuel ratio, engine load, the temperature of the intake air and the like, which influence the combustion state (for example, ignition delay time, combustion period and the like) of the engine 1.

If the determination in Step S105 is affirmative, the ECU 90 confirms (memorizes) the value determined in Step S104 (the value modified considering the undulation correction value) as the ending time of the second pilot injection and confirms (memorizes) the value obtained in Step S102 as the command information regarding the waveform of the driving pulse ofhe fuel injection value 13. Then the ECU 90 completes this routine.

On the other hand, if the determination in Step S105 is negative, the ECU 90 determines whether the ending time (candidate value) of the second pilot injection determined in Step S104 (the value modified considering the undulation correction value) is later than the backward limit value L2 of the suitable range (L1-L2) in Step S106.

If the determination in Step S106 is affirmative, in other word, the ending time (candidate value) of the second pilot injection determined in Step S104 (the value modified considering the undulation correction value) is later than the backward limit value L2 of the suitable range (L1-L2), the backward limit value L2 is adopted as the suitable value for the ending time (Step S107a).

Then, in Step S108a, the ECU 90 calculates a deficiency of fuel injection quantity corresponding to the difference between the backward limit value L2 and the ending time (candidate value) of the second pilot injection obtained in Step S104 (the value modified considering the undulation correction value).

Then, in Step S109a, the ECU 90 increases the main injection quantity to complement the deficiency of fuel injection quantity (total fuel injection quantity).

After having passed through Step S109a, the ECU 90 adopts (memorizes) the backward limit value L2 as the ending time of the second pilot injection and the value modified in S109a as the ending time of the main injection. Further, the ECU 90 adopts the candidate values as the other command information, which were obtained in Step S102, for determining the waveform of the driving pulses of the fuel injection valve 13, and then completes this routine.

On the other hand, if the determination in Step S106 is negative, in other words, the ending time (candidate value) of the second pilot injection determined in Step S104 (the value modified considering the undulation correction value) is later than the forward limit value L1 of the suitable range (L1-L2), the ECU 90 adopts the forward limit value L1 as the suitable value for the ending time (Step S107b).

Then, in Step S108b, the ECU 90 calculates an excess of fuel injection quantity corresponding to the difference between the forward limit value L1 and the ending time (candidate value) of the second pilot injection obtained in Step S104 (the value modified considering the undulation correction value).

Then, in Step S109b, the ECU 90 reduces the main injection quantity to cancel out the excess of fuel injection quantity (total fuel injection quantity). After having, passed through Step S109b, the ECU 90 adopts (memorizes) the forward limit value L1 as the ending time of the second pilot injection and the value modified in S109b as the ending time of the main injection. Further, the ECU 90 adopts the candidate values as the other command information, which were obtained in Step S102 , for determining the waveform of the driving pulses of the fuel injection valve 13, and then completes this routine.

According to the above described control procedures, the ECU 90 determines suitable waveforms of driving pulses of the fuel injection valve 13 to carry out a pilot injection.

In this manner, considering the influence of the pressure fluctuation (pressure pulsation) that occurs in the fuel passageway caused by the first injection, the fuel injection control system of the engine 1 of the present embodiment (1) modifies the fuel injection quantity of the second pilot injection (the ending time of the second pilot), thereby to cancel out the influence on the fuel injection quantity and the injection timing of the second pilot injection. (2) In addition, the control system sets the suitable range (L1-L2) for the pilot interval to prevent excessive variation of the pilot interval that may influence the combustion state of the engine 1. (3) If an applicable value (candidate value) to cancel out the influence of the pressure fluctuation is earlier timing or later timing than the suitable range, the system adopts a specific value (forward limit value L1 or backward limit value L2 in this embodiment) as the suitable value. (4) If the system adopts the specific value in the suitable range as the suitable value of the ending time of the second pilot injection, the system makes the fuel injection quantity reflect the difference between the suitable value and the candidate value.

Applying the control structure described above, when the system modifies the fuel injection quantity of the second pilot injection (the ending time of the second pilot) to cancel out the influence (for example, the variations of engine output and exhaust characteristic) of the pressure fluctuation generated by the first pilot injection, it does not happen that the pilot interval departs from the preferable range due to the secondary effect of the modification and the unique effects (reduction of combustion noise and reduction of Nox output) of the pilot injection are diminished as the result. Further, the engine torque is not changed because the actual total fuel quantity can be surely made equal to the quantity demanded to obtain the required engine output (target value).

Therefore, the effectiveness of the pilot injection is secured enough to optimize the output and the exhaust characteristic of the engine 1.

In addition, the present invention is not only applicable to the control structure which performs the pilot injection twice and the subsequent main injection, but also applicable to the control structure which performs the pilot injection at least three times and the subsequent main injection in succession in a single combustion cycle.

Further, in the preferred embodiment described above, an electromagnetic valve provided with a electric solenoid (not shown) has been adopted as the fuel injection valve 13.

However, It is also possible with the present invention to adopt a so-called fuel injection valve with a piezo-electronic actuator, utilizing the characteristic of a piezo element which stretches/shrinks according to the applied voltage value and the like.

### [Modifications of the preferred embodiment]

In the preferred embodiment described above, as shown in the serial processing procedures in the routine of FIG. 4 (S105 → S106 → S107a → S108a → S109a) and the time chart of FIG. 3 (a), the backward limit L2 is adopted as the suitable value of the ending time of the second pilot injection, if the ending time (candidate value) of the second pilot injection, which has been modified by considering the undulation correction value, is the later timing than the backward limit value L2. And, the control structure, which backwards the ending time of the main injection so as to increase the fuel quantity of the main injection reflecting the difference ΔC2 (period) between the candidate value and the suitable value in the fuel quantity of the third fuel injection (the main injection), is adopted.

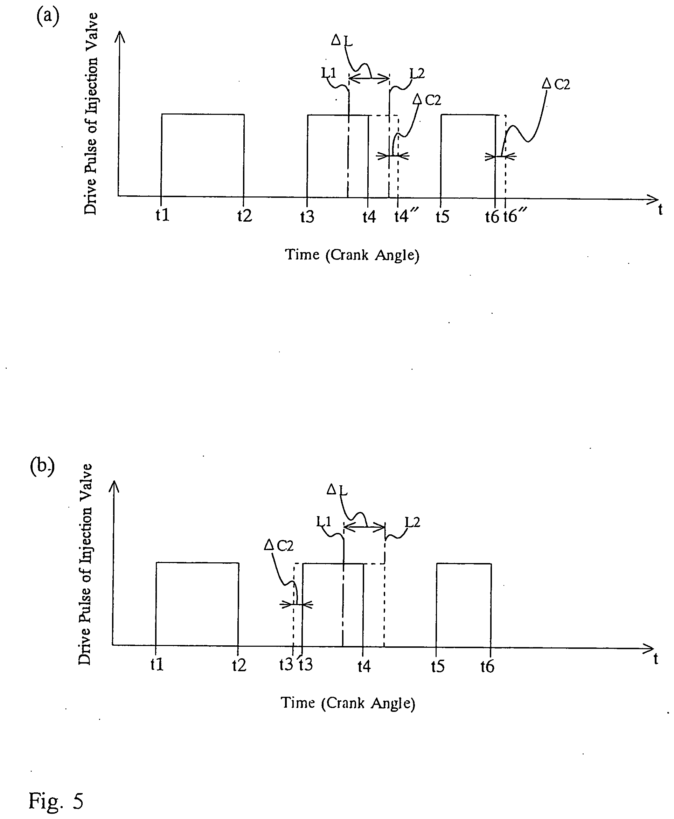

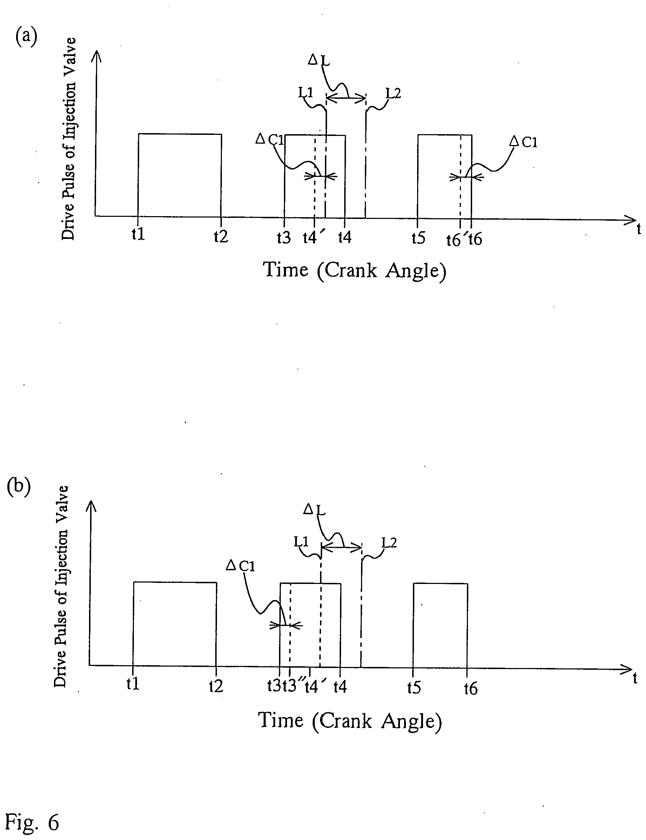

Instead, the following control structure may be also adopted.
(A) In case that the ending time (candidate value) of the second pilot injection, which has been modified by considering the undulation correction value, is the later timing than the backward limit value L2 in an arbitrary combustion cycle, the ECU 90 determines the waveform of the drive pulses of the fuel injection valve 13 in the same manner as the above described embodiment in the combustion cycle. In other words, the ECU 90 adopts the backward limit L2 as the suitable value of the ending time of the second pilot injection, makes the difference ΔC2 (period) between the candidate value and the suitable value reflect to the fuel quantity of the third fuel injection (the main injection), and sets back the ending time of the main injection from t6 to t6" (see Fig. 5(a)), thereby to increase the fuel quantity of the main injection.
(B) In and after the next combustion cycle, the ECU 90 continuously adopts the backward limit L2 as the suitable value of the ending time of the second pilot injection. However, in and after the next combustion cycle, the ECU 90 brings back the ending time of the main injection from t6" to t6. In addition, the ECU 90 sets forward the staring time of the main injection from t3 to t3', to adjust the total fuel injection quantity by considering the difference ΔC2 between the candidate value and the suitable value (see Fig. 5(b)). Further, In the preferred embodiment described above, as shown in the serial processing procedures in the routine of FIG. 4 (S105 → S106 → S107b → S108b → S109b) and the time chart of FIG. 3 (b), the forward limit L1 is adopted as the suitable value of the ending time of the second pilot injection, if the ending time (candidate value) of the second pilot injection, which has been modified by considering the undulation correction value, is the earlier timing than the forward limit value L1. And, the control structure, which forwards the ending time of the main injection to decrease the fuel quantity of the main injection reflecting the difference ΔC1 (period) between the candidate value and the suitable value in the fuel quantity of the third fuel injection (the main injection), is adopted.
   Instead, the following control structure may be also adopted.
(C) In case that the ending time (candidate value) of the second pilot injection, which has been modified by considering the undulation correction value, is the earlier timing than the forward limit value L1 in an arbitrary combustion cycle, the ECU 90 determines the waveform of the drive pulses of the fuel injection valve 13 in the same manner as the above described embodiment in the combustion cycle. In other words, the ECU 90 adopts the forward limit L1 as the suitable value of the ending time of the second pilot injection, makes the difference Δ C1 (period) between the candidate value and the suitable value reflect to the fuel quantity of the third fuel injection (the main injection), and sets forward the ending time of the main injection from t6 to t6' (see Fig. 6(a)), thereby to increase the fuel quantity of the main injection.
(D) In and after the next combustion cycle, the ECU 90 continuously adopts the forward limit L1 as the suitable value of the ending time of the second pilot injection.
   However, in and after the next combustion cycle, the ECU 90 brings back the ending time of the main injection from t6' to t6. In addition, the ECU 90 sets back the staring time of the main injection from t3 to t3", to adjust the total fuel injection quantity by considering the difference Δ C1 between the candidate value and the suitable value (see Fig. 6(b)). By adopting the modification of the embodiment described above, the combustion state can be stabilized (the engine noises can be reduced) without changing the ending time of the main injection or changing the injection period of the first pilot injection. In other words, the control structure of the modification provides the effect similar to that provided by the control structure of the preferred embodiment.

Meanwhile, in the modification of the preferred embodiment, in case that the ending time (the candidate value) of the second pilot injection in an arbitrary combustion cycle departs from the suitable range (L1-L2), the ECU changes the ending time of the main injection. And in the next combustion cycle, the ECU 90 restitutes the ending time and changes (corrects) the staring time of the second pilot injection. However, instead of such a control structure, the following control structure may be adopted, in which the ECU 90 does not change the ending time of the main injection in and after the combustion cycle but changes (corrects) the starting time of the second injection in and after the next combustion cycle, in case that the ending time (the candidate value) of the second pilot injection in an arbitrary combustion cycle departs form the suitable range (L1-L2).

For reference's sake, even in the above case, the ECU 90 adopts the forward limit L1 or backward limit L2 as the suitable value of the ending time of the second pilot injection in and after the combustion cycle.

In addition, in the above described embodiments (including modifications), the ECU 90 adopts the forward limit L1 or the backward limit L2 as the suitable value of the second pilot injection in case that the ending time of the second pilot injection departs from the suitable range (L1-L2).

However, in case that the ending time of the second pilot injection departs from the suitable range (L1-L2), other values in the suitable range (L1-L2) may be adopted instead of the forward limit L1 or the backward limit L2, to provide the effect similar to that provided by the preferred embodiments.

For reference's sake, it is preferable that the pilot interval is maintained in a predetermined range without changing the ending time of the main injection (the third fuel injection), the injection period of the subsequent fuel injections and the starting time of the second fuel injection.

Accordingly, it is preferable to adopt the nearest value in the suitable range (L1-L2) to the ending time of the second pilot injection corrected considering the undulation correct value, as the ending time of the second pilot injection.

Therefore, it is the most preferable to adopt the nearest value (the forward limit L1 or the backward limit L2) in the suitable range in case that the ending time (candidate value) of the second pilot injection departs from the suitable range (L1-L2), like the above described control structure in the preferred embodiments does.

### Industrial Applicability

The system and the method of the present invention are useful to improve control precision of quantity and timing of fuel injection and to improve engine output and exhaust characteristic in conducting a fuel injection of at least three times in succession in a single combustion cycle of an internal combustion engine.

## Claims

1. A fuel injection control system of an internal combustion engine (1) including a fuel injection valve (13) for injecting fuel into a combustion chamber (20) of the engine (1), comprising a forced feed means (11) for forcedly feeding fuel into the fuel injection valve (13) through a fuel passageway (P1) and a control means (90) for controlling the fuel injection valve (13) to conduct a fuel injection of at least three times in succession in a single combustion cycle, the control means (90) comprising an injection period calculation means for calculating a fuel injection period for each injection according to the operation condition of the engine (1), **characterized in that** the control means (90) further comprises a second injection period correction means for correcting an ending time of the second fuel injection according to a pressure fluctuation of the fuel caused by the first fuel injection, a suitable range set means for setting a suitable range of the ending time of the second fuel injection, a suitable value determination means for determining a suitable value of the ending time to be applied to the second fuel injection in the suitable range according to the corrected ending time of the second fuel injection, and a third injection quantity determination means for determining the fuel injection quantity of the third fuel injection according to the difference between the suitable value and the corrected ending time of the second fuel injection.

2. The fuel injection control system according to claim 1, **characterized in that** the suitable range set means sets the suitable range of the ending time of the second fuel injection so that the interval between the ending time of the second fuel injection and the starting time of the third fuel injection is limited in a specific range.

3. The fuel injection control system according to claim 1 or 2, **characterized in that** the suitable value determination means sets the ending time of the corrected second fuel injection as the suitable value if the ending time of the corrected second fuel injection is in the suitable range, sets the earliest time in the suitable range as the suitable value if the ending time of the corrected second fuel injection is earlier than the earliest time in the suitable range, and sets the latest time in the suitable range as the suitable value if the ending time of the corrected second fuel injection is later than the earliest time in the suitable range.

4. The fuel injection control system according to claims 1-3, **characterized in that** the third injection quantity determination means decreases the fuel injection quantity in or after the third fuel injection by the difference value between the determined suitable value and the ending time of the corrected second fuel injection if the determined suitable value is later than the ending time of the corrected second fuel injection, and increases the fuel injection quantity of the third fuel injection by the difference value between the determined suitable value and the ending time of the corrected second fuel injection if the determined suitable value is earlier than the ending time of the corrected second fuel injection.

5. The fuel injection control system according to any one of claims 1-4, **characterized by** comprising an estimation means for quantitatively estimating the pressure fluctuation caused by the first fuel injection, according to the engine rotation speed.

6. A fuel injection control system of an internal combustion engine (1) including a fuel injection valve (13) for injecting fuel into a combustion chamber (20) of the engine (1), comprising a forced feed means (11) for forcedly feeding fuel into the fuel injection valve (13) through a fuel passageway (P1) and a control means (90) for controlling the fuel injection valve (13) to conduct a fuel injection of at least three times in succession in a single combustion cycle, the control means (90) comprising an injection period calculation means for calculating a fuel injection period for each injection according to the operation condition of the engine (1), **characterized in that** the control means (90) further comprises a second injection period correction means for correcting an ending time of the second fuel injection according to a pressure fluctuation of the fuel caused by the first fuel injection, a suitable range set means for setting a suitable range of the ending time of the second fuel injection, a suitable value determination means for determining a suitable value of the ending time to be applied to the second fuel injection in the suitable range according to the corrected ending time of the second fuel injection, and a second injection starting time correction means for correcting the starting time of the second fuel injection in or after the next combustion cycle according to the difference between the suitable value and the corrected ending time of the second fuel injection.

7. The fuel injection control system according to any one of claims 1-6, **characterized by** conducting the main fuel injection to obtain the engine output as the third fuel injection.

8. A method for conducting a fuel injection of at least three times in succession in a single combustion cycle of an internal combustion engine (1), using a controllable fuel injection valve (13) and a fuel supply system for injecting to supply a high pressure fuel into a combustion chamber (20) of the engine (1), **characterized by** a step for determining a fuel injection quantity of a third fuel injection, based on the difference between a corrected ending time of a second fuel injection which is determined according to a pressure fluctuation of the high pressure fuel caused by a first fuel injection, and a suitable value of the ending time of the second fuel injection which is determined according to the corrected ending time of the second fuel injection and a starting time of the third fuel injection, and which suitable value is applied to the second fuel injection.

9. A method for conducting the fuel injection according to claim 8, **characterized by** determining the suitable value so that an interval between the ending time of the second fuel injection and the starting time of the third fuel injection becomes in a specific suitable range.

## Patentansprüche

1. Kraftstoffeinspritzsteuerungssystem einer Brennkraftmaschine (1), das ein Kraftstoffeinspritzventil (13) zum Einspritzen von Kraftstoff in eine Brennkammer (20) der Maschine (1) hat, wobei das Kraftstoffeinspritzsteuerungssystem eine Zwangsfördereinrichtung (11) zum Zwangsfördern von Kraftstoff in das Kraftstoffeinspritzventil (13) durch einen Kraftstoffdurchgang (P1) und eine Steuerungseinrichtung (90) zum Steuern des Kraftstoffeinspritzventils (13), um eine Kraftstoffeinspritzung wenigstens drei Mal in Folge in einem einzelnen Verbrennungszyklus auszuführen, aufweist, wobei die Steuerungseinrichtung (90) eine Einspritzzeitspannenberechnungseinrichtung zum Berechnen einer Kraftstoffeinspritzzeitspanne für jede Einspritzung gemäß dem Betriebszustand der Maschine (1) aufweist,
**dadurch gekennzeichnet, dass** die Steuerungseinrichtung (90) des Weiteren eine zweite Einspritzzeitspannenkorrektureinrichtung zum Korrigieren eines Endzeitpunkts der zweiten Kraftstoffeinspritzung gemäß einer Druckschwankung des Kraftstoffs, die durch die erste Kraftstoffeinspritzung verursacht wird, eine Einrichtung zum Festlegen eines geeigneten Bereichs, um einen geeigneten Bereich des Endzeitpunkts der zweiten Kraftstoffeinspritzung festzulegen, eine Einrichtung zum Bestimmen eines geeigneten Werts, um einen geeigneten Wert des Endzeitpunkts, der auf die zweite Kraftstoffeinspritzung in dem geeigneten Bereich anzuwenden ist, gemäß dem korrigierten Endzeitpunkt der zweiten Kraftstoffeinspritzung zu bestimmen und eine dritte Einspritzmengenbestimmungseinrichtung zum Bestimmen der Kraftstoffeinspritzmenge der dritten Kraftstoffeinspritzung gemäß dem Unterschied zwischen dem geeigneten Wert und dem korrigierten Endzeitpunkt der zweiten Kraftstoffeinspritzung aufweist.

2. Kraftstoffeinspritzsteuerungssystem nach Anspruch 1, **dadurch gekennzeichnet, dass** die Einrichtung zum Festlegen des geeigneten Bereichs den geeigneten Bereich des Endzeitpunkts der zweiten Kraftstoffeinspritzung so festlegt, dass das Intervall zwischen dem Endzeitpunkt der zweiten Kraftstoffeinspritzung und dem Startzeitpunkt der dritten Kraftstoffeinspritzung in einem spezifischen Bereich begrenzt ist.

3. Kraftstoffeinspritzsteuerungssystem nach Anspruch 1 oder 2, **dadurch gekennzeichnet, dass** die Einrichtung zum Bestimmen eines geeigneten Werts den Endzeitpunkt der korrigierten zweiten Kraftstoffeinspritzung als den geeigneten Wert festlegt, falls der Endzeitpunkt der korrigierten zweiten Kraftstoffeinspritzung in dem geeigneten Bereich ist, den frühesten Zeitpunkt in dem geeigneten Bereich als den geeigneten Wert festlegt, falls der Endzeitpunkt der korrigierten zweiten Kraftstoffeinspritzung früher ist als der früheste Zeitpunkt in dem geeigneten Bereich, und den spätesten Zeitpunkt in dem geeigneten Bereich als den geeigneten Wert festlegt, falls der Endzeitpunkt der korrigierten zweiten Kraftstoffeinspritzung später ist als der früheste Zeitpunkt in dem geeigneten Bereich.

4. Kraftstoffeinspritzsteuerungssystem nach einem der Ansprüche 1 bis 3, **dadurch gekennzeichnet, dass** die dritte Einspritzmengenbestimmungseinrichtung die Kraftstoffeinspritzmenge in oder nach der dritten Kraftstoffeinspritzung durch den Differenzwert zwischen dem bestimmten geeigneten Wert und dem Endzeitpunkt der korrigierten zweiten Kraftstoffeinrichtung verringert, falls der bestimmte geeignete Wert später ist als der Endzeitpunkt der korrigierten zweiten Kraftstoffeinspritzung, und die Kraftstoffeinspritzmenge der dritten Kraftstoffeinspritzung durch den Differenzwert zwischen dem bestimmten geeigneten Wert und dem Endzeitpunkt der korrigierten zweiten Kraftstoffeinspritzung erhöht, falls der bestimmte geeignete Wert früher ist als der Endzeitpunkt der korrigierten zweiten Kraftstoffeinspritzung.

5. Kraftstoffeinspritzsteuerungssystem nach einem der Ansprüche 1 bis 4, **gekennzeichnet durch** Aufweisen einer Schätzeinrichtung zum quantitativen Schätzen der Druckschwankung, die durch die erste Kraftstoffeinspritzung verursacht wird, gemäß der Maschinendrehzahl.

6. Kraftstoffeinspritzsteuerungssystem einer Brennkraftmaschine (1), das ein Kraftstoffeinspritzventil (13) zum Einspritzen von Kraftstoff in eine Brennkammer (20) der Maschine (1) hat, wobei das Kraftstoffeinspritzsteuerungssystem eine Zwangsfördereinrichtung (11) zum Zwangsfördern von Kraftstoff in das Kraftstoffeinspritzventil (13) durch einen Kraftstoffdurchgang (P1) und eine Steuerungseinrichtung (90) zum Steuern des Kraftstoffeinspritzventils (13) hat, um eine Kraftstoffeinspritzung wenigstens drei Mal in Folge in einem einzelnen Verbrennungszyklus auszuführen, aufweist, wobei die Steuerungseinrichtung (90) eine Einspritzzeitspannenberechnungseinrichtung zum Berechnen einer Kraftstoffeinspritzzeitspanne für jede Einspritzung gemäß dem Betriebszustand der Maschine (1) aufweist,
**dadurch gekennzeichnet, dass** die Steuerungseinrichtung (90) des Weiteren eine zweite Einspritzzeitspannenkorrektureinrichtung zum Korrigieren eines Endzeitpunkts der zweiten Kraftstoffeinspritzung gemäß einer Druckschwankung des Kraftstoffs, die durch die erste Kraftstoffeinspritzung verursacht wird, eine Einrichtung zum Festlegen eines geeigneten Bereichs, um einen geeigneten Bereich des Endzeitpunkts der zweiten Kraftstoffeinspritzung festzulegen, eine Einrichtung zum Bestimmen eines geeigneten Werts, um einen geeigneten Wert des Endzeitpunkts, der auf die zweite Kraftstoffeinspritzung in dem geeigneten Bereich anzuwenden ist, gemäß dem korrigierten Endzeitpunkt der zweiten Kraftstoffeinspritzung zu bestimmen, und eine zweite Einspritzstartzeitpunktkorrektureinrichtung zum Korrigieren des Startzeitpunkts der zweiten Kraftstoffeinspritzung in oder nach dem nächsten Verbrennungszyklus gemäß dem Unterschied zwischen dem geeigneten Wert und dem korrigierten Endzeitpunkt der zweiten Kraftstoffeinspritzung aufweist.

7. Kraftstoffeinspritzsteuerungssystem nach einem der Ansprüche 1 bis 6, **gekennzeichnet durch** Ausführen der Hauptkraftstoffeinspritzung, um die Maschinenleistung zu erhalten, als die dritte Kraftstoffeinspritzung.

8. Verfahren zum Ausführen einer Kraftstoffeinspritzung wenigstens drei Mal in Folge in einem einzelnen Verbrennungszyklus einer Brennkraftmaschine (1) unter Verwendung eines steuerbaren Kraftstoffeinspritzventils (13) und eines Kraftstoffzufuhrsystems zum Einspritzen, um einen Hochdruckkraftstoff in eine Brennkammer (20) der Maschine (1) zuzuführen, **gekennzeichnet durch** einen Schritt zum Bestimmen einer Kraftstoffeinspritzmenge einer dritten Kraftstoffeinspritzung auf der Basis der Differenz zwischen einem korrigierten Endzeitpunkt einer zweiten Kraftstoffeinspritzung, der gemäß einer Druckschwankung des Hochdruckkraftstoffs bestimmt ist, die durch eine erste Kraftstoffeinspritzung verursacht wird, und einem geeigneten Wert des Endzeitpunkts der zweiten Kraftstoffeinspritzung, der gemäß dem korrigierten Endzeitpunkt der zweiten Kraftstoffeinspritzung und einem Startzeitpunkt der dritten Kraftstoffeinspritzung bestimmt ist, und wobei der geeignete Wert auf die zweite Kraftstoffeinspritzung angewendet ist.

9. Verfahren zum Ausführen der Kraftstoffeinspritzung nach Anspruch 8, **gekennzeichnet durch** Bestimmen des geeigneten Werts so, dass ein Intervall zwischen dem Endzeitpunkt der zweiten Kraftstoffeinspritzung und dem Startzeitpunkt der dritten Kraftstoffeinspritzung in einen bestimmten geeigneten Bereich kommt.

## Revendications

1. Système de réglage d'injection de carburant d'un moteur à combustion interne (1) comprenant une soupape d'injection de carburant (13) pour injecter le carburant dans une chambre de combustion (20) du moteur (1), comprenant :
un moyen d'alimentation forcé (11) pour amener de force le carburant dans la soupape d'injection de carburant (13) par une voie de passage de carburant (P1) et un moyen de réglage (90) pour régler la soupape d'injection de carburant (13) afin de réaliser une injection de carburant au moins trois fois successivement dans un seul cycle de combustion, le moyen de réglage (90) comprenant un moyen de calcul de période d'injection pour calculer une période d'injection de carburant pour chaque injection selon une condition de fonctionnement du moteur (1),
**caractérisé en ce que** le moyen de réglage (90) comprend en outre :
un deuxième moyen de correction de période d'injection pour corriger un temps de fin de la deuxième injection de carburant selon une fluctuation de pression du carburant provoquée par la première injection de carburant, un moyen de réglage de plage appropriée pour régler une plage appropriée du temps de fin de la deuxième injection de carburant, un moyen de détermination de valeur appropriée pour déterminer une valeur appropriée du temps de fin à appliquer sur la deuxième injection de carburant dans la plage appropriée selon le temps de fin corrigé de la deuxième injection de carburant, et un troisième moyen de détermination de quantité d'injection pour déterminer la quantité d'injection de carburant de la troisième injection de carburant selon la différence entre la valeur appropriée et le temps de fin corrigé de la deuxième injection de carburant.

2. Système de réglage d'injection de carburant selon la revendication 1, **caractérisé en ce que** le moyen de réglage de plage appropriée règle la plage appropriée du temps de fin de la deuxième injection de carburant de sorte que l'intervalle entre le temps de fin de la deuxième injection de carburant et le temps de démarrage de la troisième injection de carburant est limité dans une plage spécifique.

3. Système de réglage d'injection de carburant selon la revendication 1 ou 2, **caractérisé en ce que** le moyen de détermination de valeur appropriée règle le temps de fin de la deuxième injection de carburant corrigée en tant que valeur appropriée si le temps de fin de la deuxième injection de carburant corrigée est dans la plage appropriée, règle le premier temps dans la plage appropriée en tant que valeur appropriée si le temps de fin de la deuxième injection de carburant corrigée est antérieur au premier temps dans la plage appropriée et règle le dernier temps dans la plage appropriée en tant que valeur appropriée si le temps de fin de la deuxième injection de carburant corrigée est postérieur au premier temps dans la plage appropriée.

4. Système de réglage d'injection de carburant selon les revendications 1 à 3, **caractérisé en ce que** le troisième moyen de détermination de quantité d'injection diminue la quantité d'injection de carburant pendant ou après la troisième injection de carburant par une valeur de différence entre la valeur appropriée déterminée et le temps de fin de la deuxième injection de carburant corrigée si la valeur appropriée déterminée est postérieure au temps de fin de la deuxième injection de carburant corrigée, et augmente la quantité d'injection de carburant de la troisième injection de carburant par la valeur de différence entre la valeur appropriée déterminée et le temps de fin de la deuxième injection de carburant corrigée si la valeur appropriée déterminée est antérieure au temps de fin de la deuxième injection de carburant corrigée.

5. Système de réglage d'injection de carburant selon l'une quelconque des revendications 1 à 4, **caractérisé en ce qu'**il comprend un moyen d'estimation pour estimer, du point de vue quantitatif, la fluctuation de pression provoquée par la première injection de carburant, selon la vitesse de rotation du moteur.

6. Système de réglage d'injection de carburant d'un moteur à combustion interne (1) comprenant une soupape d'injection de carburant (13) pour injecter le carburant dans une chambre de combustion (20) du moteur (1) comprenant :
un moyen d'alimentation de force (11) pour amener de force le carburant dans la soupape d'injection de carburant (13) par une voie de passage de carburant (P1) et un moyen de réglage (90) pour régler la soupape d'injection de carburant (13) afin de réaliser une injection de carburant au moins trois fois successivement dans un seul cycle de combustion, le moyen de réglage (90) comprenant un moyen de calcul de période d'injection pour calculer une période d'injection de carburant pour chaque injection selon la condition de fonctionnement du moteur (1),
**caractérisé en ce que** le moyen de réglage (90) comprend un deuxième moyen de correction de période d'injection pour corriger un temps de fin de la deuxième injection de carburant selon une fluctuation de pression du carburant provoquée par la première injection de carburant, un moyen de réglage de plage appropriée pour régler une plage appropriée du temps de fin de la deuxième injection de carburant, un moyen de détermination de valeur appropriée pour déterminer une valeur appropriée du temps de fin à appliquer à la deuxième injection de carburant dans la plage appropriée selon le temps de fin corrigé de la deuxième injection de carburant, et un deuxième moyen de correction de temps de démarrage d'injection pour corriger le temps de démarrage de la deuxième injection de carburant pendant ou après le cycle de combustion suivant selon la différence entre la valeur appropriée et le temps de fin corrigé de la deuxième injection de carburant.

7. Système de réglage d'injection de carburant selon l'une quelconque des revendications 1 à 6, **caractérisé par** l'étape pour amener l'injection de carburant principale à obtenir la sortie de moteur en tant que troisième injection de carburant.

8. Procédé pour réaliser une injection de carburant d'au moins trois fois, successivement dans un seul cycle de combustion d'un moteur à combustion interne (1), en utilisant une soupape d'injection de carburant réglable (13) et un système d'alimentation en carburant pour l'injection afin de fournir un carburant à haute pression dans une chambre de combustion (20) du moteur (1), **caractérisé par** une étape pour déterminer une quantité d'injection de carburant d'une troisième injection de carburant, sur la base de la différence entre un temps de fin corrigé d'une deuxième injection de carburant qui est déterminé selon une fluctuation de pression du carburant à haute pression provoquée par la première injection de carburant, et une valeur appropriée du temps de fin de la deuxième injection de carburant qui est déterminé selon le temps de fin corrigé de la deuxième injection de carburant et un temps de démarrage de la troisième injection de carburant, et laquelle valeur appropriée est appliquée à la deuxième injection de carburant.

9. Procédé pour réaliser l'injection de carburant selon la revendication 8, **caractérisé par** l'étape pour déterminer la valeur appropriée de sorte qu'un intervalle entre le temps de fin de la deuxième injection de carburant et le temps de démarrage de la troisième injection de carburant a lieu dans une plage appropriée spécifique.
